# EUROPEAN PATENT APPLICATION

(11) **EP 4 239 028 A1**
(43) Date of publication of application: **06.09.2023**
(21) Application number: 21886886.7
(22) Date of filing: 29.10.2021
(51) Int. Cl.: C08L 67/04, C08L 5/00, C08J 3/02, C09D 167/04, D21H 19/00, C08J 7/04

(54) **PHA COMPOSITION AND PREPARATION METHOD THEREFOR**

(30) Priority: 30.10.2020 KR 20200143256
(71) Applicant: CJ Cheiljedang Corporation, Seoul 04560 (KR)
(72) Inventor: SHIM, Yoo Kyoung, Seoul 04560 (KR); LEE, Eun-Hye, Seoul 04560 (KR); CHANG, Dong-Eun, Seoul 04560 (KR)
(74) Representative: Schiweck Weinzierl Koch Patentanwälte Partnerschaft mbB
(86) International application number: PCT/KR2021/015430
(87) International publication number: WO 2022/092892

(57) **Abstract**

The present invention relates to a polyhydroxyalkanoate (PHA) composition having improved stability and water resistance, and a preparation method therefor. According to the present invention, the aggregation of water-dispersed PHA particles can be prevented, and re-dispersion is induced so that precipitation can be prevented, and thus the dispersion stability and water resistance of PHA can be improved. In addition, the composition of the present invention minimizes the use of additives to enable recycling of biodegradable PHA, and has excellent compatibility with conventional commercial products and excellent room-temperature stability. Additionally, since overuse of a surfactant and an additional step of forming an emulsion are not required in the preparation of PHA, economic feasibility can be improved.

## Description

### Technical Field

The present invention relates to a polyhydroxyalkanoate (PHA) composition having improved stability and water resistance, and a preparation method therefor.

This application claims the benefit of priority from Korean Patent Application No. 10-2020-0143256, filed on October 30, 2020, the entire disclosure of which is incorporated by reference herein.

### Background Art

Polyhydroxyalkanoates (PHAs) are biodegradable plastics which can be used to make, without limitation, films (e.g., packaging films, agricultural films, mulch film), golf tees, caps and closures, agricultural supports and stakes, paper and board coatings (e.g., for cups, plates, boxes, etc), thermoformed products (e.g., trays, containers, yogurt pots, plant pots, noodle bowls, moldings, etc.), housings (e.g., for electronic items) bags (e.g., trash bags, grocery bags, food bags, compost bags, etc.), hygiene articles (e.g., diapers, feminine hygiene products, incontinence products, disposable wipes, etc.) and coatings for pelleted products (e.g., pelleted fertilizer, herbicides, pesticides, seeds, etc.).

PHAs have also been used to develop biomedical devices including sutures, repair devices, repair patches, slings, cardiovascular patches, orthopedic pins, adhesion barriers, stents, guided tissue repair/regeneration devices, articular cartilage repair devices, nerve guides, tendon repair devices, bone marrow scaffolds, and wound dressings.

Polyhydroxyalkanoates (PHAs) can be produced by a fermentation process. PHAs dispersed in water physically cause aggregation and precipitation of the particles due to self-cohesive force, and the precipitated particles form a lump with strong attraction.

Korean Patent Registration No. 10-0602193 discloses an emulsion polymerization process in which a surfactant is added after reacting at a temperature of 230 °C or higher for a total of 10 hours or more to disperse a polyester (including PHA) resin.

Conventionally, in order to maintain dispersion stability in water, a polymerization process is generally performed in the form of an emulsion using a surfactant. Here, coating or micellizing each particle on the monomer is performed. In this case, the polymerization process is needed to perform for 10 hours or more with a large amount of additives and nitrogen purging. The surfactant used in micellizing has disadvantages that a high temperature reaction of 80 °C or more is need, so the manufacturing process is complicated.

Therefore, there is a need for research to use PHA efficiently and economically by simplifying the process and improving physical properties to meet the purpose of use of PHA.

### Detailed Description of the Invention

### Technical Problem

An object of the present invention is to provide a polyhydroxyalkanoate (PHA) composition having improved dispersion stability and water resistance.

In addition, it is to provide a method for preparing the PHA composition.

### Solution to Problem

In order to solve the above problems, the present invention provides a polyhydroxyalkanoate (PHA) composition comprising, based on the total weight of the composition,
10 to 70% by weight of polyhydroxyalkanoate (PHA); and
1 to 10% by weight of additive,
wherein the PHA comprises poly-3-hydroxybutyrate-co-4-hydroxybutyrate (P3HB-4HB),
the content of 4HB in the PHA copolymer is 0.1 to 20%,
the additive comprises a rheology modifier together with a surfactant or a dispersant, and
the surfactant or the dispersant is present in an amount of less than 0.3% by weight based on the total weight of the composition.

According to one embodiment, the molecular weight of PHA may be Mw 10,000 to 1,000,000. In addition, the particle diameter of PHA may be 10 µm or less.

According to one embodiment, the surfactant may include one or more selected from the group consisting of cationic, anionic, nonionic and amphoteric surfactants.

According to one embodiment, the additive may further comprise one or more selected from the group consisting of a thickener and an antifoaming agent.

According to one embodiment, the rheology modifier may include one or more selected from the group consisting of gums, acrylics, urethanes, and epoxies.

In addition, the gums may be non-spherical and may include acidic polysaccharides, such as gellan gum, xanthan gum, carrageenan, curdlan gum, karaya gum, tragacanth gum, ghatti gum, algin, agar gum, furcellaran, etc.

According to one embodiment, the dispersant may comprise one or more selected from the group consisting of acrylic-based dispersants, urethane-based dispersants, epoxy-based dispersants, polyvinyl alcohols, and celluloses.

According to one embodiment, the rheology modifier may be present in an amount of 0.5% by weight or less based on the total weight of the composition.

In addition, polyvinyl alcohol may have a molecular weight of Mw 10,000 to 200,000 and a degree of hydrolysis of 80 to 99 mol%.

According to one embodiment, the coating weight of the composition may be 10 g/m² or more to 30 g/m².

In addition, the cobb value of the composition may be 3 g/m² or more and 20 g/m².

According to another embodiment of the present invention, there is provided a method for preparing a PHA composition, comprising preparing an aqueous PHA dispersion; and adding additive to the dispersion with stirring.

Details of other embodiments of the present invention are included in the detailed description below.

### Effect of the Invention

According to the present invention, the aggregation of water-dispersed polyhydroxyalkanoate (PHA) particles can be prevented, and re-dispersion is induced so that precipitation can be prevented, and thus the dispersion stability and water resistance of PHA can be improved.

In addition, the composition of the present invention minimizes the use of additives to enable recycling of biodegradable PHA, and has excellent compatibility with conventional commercial products and excellent room-temperature stability.

Additionally, since excessive use of a surfactant and an additional step of forming an emulsion are not required in the preparation of PHA, economic efficiency can be improved.

### Brief Description of Drawings

Fig. 1 is a photograph showing the dispersion stability of Examples.
Fig. 2 is a photograph showing the dispersion stability of Comparative Examples.

### Best Mode for Carrying out the Invention

The present invention may have various modification and various embodiments and specific embodiments will be illustrated in the drawings and described in detail. However, this is not intended to limit the present invention to specific embodiments, and should be understood to include all modifications, equivalents, and substitutes included in the spirit and scope of the present invention. In describing the present invention, if it is determined that a detailed description of a related known technology may obscure the gist of the present invention, the detailed description thereof will be omitted.

Unless otherwise specified, the expression "to" in relation to a number used herein is used as an expression including the corresponding numerical value. Specifically, for example, the expression "1 to 2" is meant to include all numbers between 1 and 2 as well as 1 and 2.

Unless the context indicates otherwise, singular expressions are intended to include the plural expressions.

The term "PHA copolymer" as used herein means a polymer composed of at least two different hydroxy alkanoic acid monomers.

Hereinafter, a polyhydroxyalkanoate (PHA) composition according to an embodiment of the present invention and a preparation method therefor will be described in more detail.

In particular, the present invention provides a polyhydroxyalkanoate (PHA) composition comprising, based on the total weight of the composition,
10 to 70% by weight of polyhydroxyalkanoate (PHA); and
1 to 10% by weight of additive,
wherein PHA comprises poly-3-hydroxybutyrate-co-4-hydroxybutyrate (P3HB-4HB),
the content of 4HB in the PHA copolymer is 0.1 to 20%,
the additive comprises a rheology modifier together with a surfactant or a dispersant, and
the surfactant or the dispersant is present in an amount of less than 0.3% by weight based on the total weight of the composition.

According to one embodiment, the composition of the present invention may contain 10 to 70% by weight of the PHA polymer, for example, 20% by weight or more, or 30% by weight or more, and, for example, 60% by weight or less, or 50% by weight or less. The content of the PHA polymer in the composition affects the physical properties of the composition. If the content of PHA is too low, the formation of the coating film to be coated is not uniform and physical properties such as water resistance may be deteriorated, and if it is too high, coating properties of the surface may be impaired for thin film coating with a low thickness.

In addition, the molecular weight of the PHA polymer in the composition affects physical properties of the composition. The weight average molecular weight of PHA may be Mw 10,000 to 1,000,000, for example, Mw 100,000 or more, Mw 200,000 or more, or Mw 300,000 or more, and for example, 700,000 or less, or 600,000 or less. If the molecular weight of PHA is too low, flexibility may be reduced during film formation, and if it is too high, processability may be deteriorated due to high-temperature drying and the film formation rate may be reduced.

According to one embodiment, the content of 4HB (4-hydroxybutyrate) in the PHA copolymer affects physical properties of PHA. The content of 4HB in the PHA copolymer of the present invention may be 0.1 to 20%, for example 0.1% or more, or 1% or more, or 2% or more, or 3% or more, and for example 20% or less, or 15% or less, or 10% or less. If the content of 4HB in PHA is too low, the degree of hardness is increased due to increased crystallinity, resulting in cracks after film formation or making it difficult in adhering to the substrate due to shrinkage after coating, and if it is too high, water resistance may be lost due to a change in physical properties to an amorphous polymer.

According to one embodiment, the particle size, i.e., the particle diameter of PHA may be 10 µm or less, for example, 5 µm or less, for example, 2 µm or less. As the PHA of the present invention has a small particle size and can be applied uniformly and evenly, it is suitable for use as a coating agent.

According to one embodiment, the composition of the present invention may contain 1 to 10% by weight of additives, for example, 1% by weight or more, or 2% by weight or more, or 3% by weight or more, and for example 10% by weight or less, or 8% by weight % or less, or 7% by weight or less.

The additive may comprise, for example, one or more selected from the group consisting of a rheology modifier, a dispersant, a thickener, an antifoaming agent, and a surfactant, and for example, the additive comprises a rheology modifier, a dispersant and a thickener. In addition, specifically, the additive may comprise a rheology modifier together with a surfactant or a dispersant.

The rheology modifier may include one or more selected from the group consisting of gums, acrylics, urethanes, and epoxies. According to one embodiment, the gum rheology modifier used in the present invention may be non-spherical. The non-spherical gum rheology modifier may include an acidic polysaccharide, in particular gellan gum, xanthan gum, carrageenan, curdlan gum, karaya gum, tragacanth gum, ghatti gum, algin, agar gum, furcellaran, etc. The content of the rheology modifier may be 0.5% by weight or less, for example, 0.3% by weight or less, 0.1% by weight or less, 0.05% by weight or less, and 0.001% by weight or more, or 0.01% by weight or more, based on the total composition.

An aqueous dispersant may be used as the dispersant, and for example, it includes one or more selected from the group consisting of an acrylic-based dispersant, a urethane-based dispersant, an epoxy-based dispersant, a pigment dispersant, polyvinyl alcohol, and cellulose. Specifically, it may include polyvinyl alcohol (PVA), for example. When the composition of the present invention comprises PVA, the weight average molecular weight of PVA may be Mw 10,000 to 200,000, for example Mw 10,000 to 100,000, for example Mw 10,000 to 50,000, and any grade can be used.

In addition, the degree of hydrolysis (DH) of PVA is 80 to 99 mol%, for example 80 mol% or more, or 85 mol% or more, and 99 mol% or less, or 98 mol% or less, or 94 mol% or less, or 90 mol% % or less.

The antifoaming agent may include alcohols, silicone oils, and watersoluble surfactants, and may include octanol, cyclohexanol, ethylene glycol, sorbitan fatty acid esters, etc.

The surfactant may include one or more selected from the group consisting of cationic, anionic, nonionic and amphoteric surfactants.

The cationic surfactant may include, for example, quaternary ammonium salts, alkylpyridinium salts, alkylimidazolinium salts, aliphatic amine salts, etc. Specifically, it may include dialkyl dimethyl ammonium salts, alkyl benzyl methyl ammonium salts, benzalkonium chloride, etc.

The anionic surfactant may include, for example, fatty acid sodium salts, monoalkyl sulfate, alkylbenzenesulfonate, monoalkylphosphate, sodium lauryl sulfate (SDS), etc.

The nonionic surfactant may include polyoxyethylene alkyl ether, fatty acid sorbitan ester, fatty acid diethanolamine, alkyl monoglyceryl ether, etc., for example, Tween 20, Triton X, Pluronic, etc.

Th amphoteric surfactant may include imidazoline-based surfactants, betaine-based surfactants, etc., and specifically, cocamidopropyl betaine, lauryl hydroxy sulfobetaine, alkyl sulfobetaine, alkyl carboxybetaine, etc.

In the present invention, an emulsion formation process is not necessarily required, and a surfactant may not be an essential component. Accordingly, when the surfactant is contained in the composition of the present invention, the surfactant may be used in an amount of less than 0.3% by weight, for example, 0.25% by weight or less, or 0.2% by weight or less, and for example 0.0001% by weight or more, or 0.001% by weight or more, or 0.01% by weight or more based on the total weight of the composition, specifically the total weight of solid content of the composition. In addition, a dispersant may be used instead of the surfactant.

When the surfactant is used in an amount of 0.3% by weight or more, a hydrophobic region of the surfactant is increased, making it difficult to achieve uniform dispersion in the aqueous dispersion and forming interface during coating. In addition, when the particles precipitate after dispersion, re-dispersion is difficult, and the PHA particles may agglomerate with each other to form a lump.

According to the present invention, the use of additive such as a surfactant is greatly reduced, so that the PHA manufacturing process can be performed economically and efficiently.

The additive of the present invention is not limited to those described above, and is not particularly limited as long as it is commonly used in the art.

According to another embodiment of the present invention, there is provided a method for preparing a PHA composition, comprising:
preparing an aqueous PHA dispersion; and
adding additive to the dispersion with stirring,
wherein the content of 4HB in the PHA copolymer is 0.1 to 20%,
the additive comprises a rheology modifier together with a surfactant or a dispersant,
the surfactant or the dispersant is present in an amount of less than 0.3% by weight based on the total weight of the composition, and
the PHA is present in 10 to 70% by weight in the final composition.

According to one embodiment, the preparing the aqueous PHA dispersion may comprise distilling the aqueous PHA dispersion having a solid content of, for example, 1 to 10%, for example, 3 to 8%. Alternatively, it may comprise dispersing the powders of PHA dispersion by a dispersing device.

According to one embodiment, the adding of the additives to the dispersion with stirring may be performed at room temperature. The present invention is economical because a separate operation at low temperature or high temperature is not necessarily required to improve dispersibility. Stirring at room temperature may be carried out at a temperature of 20 to 30 °C, for example, 23 to 26 °C.

The adding of the additives may comprise adding 0.1 to 5% by weight of the surfactant or dispersant, for example, 0.1% by weight or more, 0.5% by weight or more, 1% by weight or more, 2% by weight or more, and for example 5% by weight or less, or 4% by weight or less, or 3% by weight or less.

In addition, the method may comprise adding a surfactant or a dispersant such that the surfactant or the dispersant is contained in an amount of 0.3% by weight or less, for example, 0.25% by weight or less, for example, 0.2% by weight or less in the composition of the present invention.

In addition, the method may comprise adding a rheology modifier such that the rheology modifier is contained in an amount of 0.1 to 5% by weight, for example 0.1% by weight or more, or 0.5% by weight or more, or 1% by weight or more, or 2% by weight or more, and for example 5% by weight or less, or 4% by weight or less, or 3% by weight or less in the composition according to the present invention.

According to one embodiment, the coating weight of the composition according to the present invention may be 10 g/m² or more to 30 g/m², for example 11 g/m² or more, or 12 g/m² or more, or 13 g/m² or more, and 25 g/m² or less, or 20 g/m² or less.

In addition, the cobb value of the composition according to the present invention may be 3 g/m² to 20 g/m², for example, 4 g/m² or more, 5 g/m² or more, and 15 g/m² or less, 10 g/m² or less. Within the above range, it may have water resistance characteristics suitable for coating.

According to one embodiment, the composition according to the present invention can made into a coating agent, specifically, for example, can be made into a latex composition that can be used as a coating agent for paper materials such as paper cups, books, printed materials, shopping bags, or as a coating agent for an ester-based film such as PET or a polymer film material such as EVOH. It can also be made into, for example, food packaging materials such as oil paper, pizza boxes, and bread bags.

In addition, dispersibility and water resistance can be improved by optimizing the physical properties of PHA to be suitable for coating applications.

According to the present invention, the use of additives is minimized and an additional process is not required for emulsion formation. In particular, the PHA composition can be economically and efficiently prepared by minimizing the content of the surfactant.

Hereinafter, embodiments of the present invention will be described in detail so that those of ordinary skilled in the art can easily carry out the present invention. However, the present invention may be embodied in several different forms and is not limited to the embodiments described herein.

### Example 1

An aqueous dispersion of PHA (manufactured by CJ CheilJedang, Mw 600,000, PDI 1.9, <2 µm particle size, 4HB 10%) having a solid content of 5% was vacuum distilled to have a solid content of 41%.

While stirring 98 parts of the prepared 41% PHA aqueous dispersion at room temperature at 1500 rpm in a stirring device equipped with a paddle or turbine impeller, 1 part of 10% dissolved polyvinyl alcohol (PVA, kuraray, Mw 14,200, degree of hydrolysis (DH) 88 mol%) was added, followed by stirring for 1 hour.

Then, 1 part of a dispersion of 5% xanthan gum (manufactured by Dynesoze) was added and stirred for additional 10 minutes to prepare a 40% PHA aqueous coating solution.

Thus, a composition containing 0.24% by weight of 10% PVA and 0.12% by weight of 5% xanthan gum based on the PHA solid content was prepared.

### Example 2

39 parts of completely dried PHA powders having a particle size of 2 µm or less (manufactured by CJ CheilJedang, Mw 600,000, PDI 1.9, 4HB 10% by weight) and 56 parts of deionized water were added and dispersed in a highpressure disperser for 2 hours to prepare a PHA aqueous dispersion having a solid content of 41%.

While stirring 98 parts of the prepared 41% PHA aqueous dispersion at room temperature at 1500 rpm in a stirring device equipped with a paddle or turbine impeller, 1 part of 10% dissolved polyvinyl alcohol (PVA, kuraray, Mw 14,200, DH 88 %) was added, followed by stirring for 1 hour.

Then, 1 part of a dispersion of 5% xanthan gum (manufactured by Dynesoze) was added and stirred for additional 10 minutes to prepare a 40% PHA aqueous coating solution.

Thus, a composition containing 0.24% by weight of 10% PVA and 0.12% by weight of 5% xanthan gum based on the PHA solid content was prepared.

### Example 3

An aqueous dispersion of PHA (manufactured by CJ CheilJedang, Mw 600,000, PDI 1.9, <2 µm particle size, 4HB 10%) having a solid content of 5% was vacuum distilled to have a solid content of 41%.

While stirring 99 parts of the prepared 41% PHA aqueous dispersion at room temperature at 1500 rpm in a stirring device equipped with a paddle or turbine impeller, 0.1 part of SDS (Sodium Lauryl Sulfate, Sigma Aldrich) was added, followed by stirring for 1 hour.

Then, 1 part of a dispersion of 5% xanthan gum (manufactured by Dynesoze) was added and stirred for additional 10 minutes to prepare a 40% PHA aqueous coating solution.

Thus, a composition containing 0.24% by weight of SDS and 0.12% by weight of 5% xanthan gum based on the PHA solid content was prepared.

### Example 4

An aqueous dispersion of PHA (manufactured by CJ CheilJedang, Mw 600,000, PDI 1.9, <2 µm particle size, 4HB 10% by weight) having a solid content of 5% was vacuum distilled to have a solid content of 41%.

While stirring 98 parts of the prepared 41% PHA aqueous dispersion at room temperature at 1500 rpm in a stirring device equipped with a paddle or turbine impeller, 1 part of 10% dissolved polyvinyl alcohol (PVA, kuraray, Mw 14,200, DH 88 %) was added, followed by stirring for 1 hour.

Then, 1 part of a dispersion of 5% gellan gum (manufactured by Dynesoze) was added and stirred for additional 10 minutes to prepare a 40% PHA aqueous coating solution.

Thus, a composition containing 0.24% by weight of 10% PVA and 0.12% by weight of 5% gellan gum based on the PHA solid content was prepared.

### Example 5

An aqueous dispersion of PHA (manufactured by CJ CheilJedang, Mw 600,000, PDI 1.9, <2 µm particle size, 4HB 10% by weight) having a solid content of 5% was vacuum distilled to have a solid content of 41%.

While stirring 98 parts of the prepared 41% PHA aqueous dispersion at room temperature at 1500 rpm in a stirring device equipped with a paddle or turbine impeller, 1 part of 10% dissolved polyvinyl alcohol (PVA, kuraray, Mw 14,200, DH 88 %) was added, followed by stirring for 1 hour.

Then, 1 part of a dispersion of 5% carrageenan (manufactured by ES food) was added and stirred for additional 10 minutes to prepare a 40% PHA aqueous coating solution.

Thus, a composition containing 0.24% by weight of 10% PVA and 0.12% by weight of 5% carrageenan based on the PHA solid content was prepared.

### Comparative Example 1

An aqueous dispersion of PHA (manufactured by CJ CheilJedang, Mw 600,000, PDI 1.9, <2 µm particle size, 4HB 10% by weight) having a solid content of 5% was vacuum distilled to have a solid content of 40%.

### Comparative Example 2

An aqueous dispersion of PHA (manufactured by CJ CheilJedang, Mw 600,000, PDI 1.9, <2 µm particle size, 4HB 10% by weight) having a solid content of 5% was vacuum distilled to have a solid content of 41%.

While stirring 99 parts of the prepared 41% PHA aqueous dispersion at room temperature at 1500 rpm in a stirring device equipped with a paddle or turbine impeller, 1 part of 10% dissolved polyvinyl alcohol (PVA, kuraray, Mw 14,200, DH 88 %) was added, followed by stirring for 1 hour.

Thus, a composition containing 0.24% by weight of 10% PVA based on the PHA solid content was prepared.

### Comparative Example 3

An aqueous dispersion of PHA (manufactured by CJ CheilJedang, Mw 600,000, PDI 1.9, <2 µm particle size, 4HB 10%) by weight having a solid content of 5% was vacuum distilled to have a solid content of 41%.

While stirring 95 parts of the prepared 41% PHA aqueous dispersion at room temperature at 1500 rpm in a stirring device equipped with a paddle or turbine impeller, 5 parts of 10% dissolved polyvinyl alcohol (PVA, kuraray, Mw 14,200, DH 88 %) was added, followed by stirring for 1 hour.

Thus, a composition containing 1.2% by weight of 10% PVA based on the PHA solid content was prepared.

### Comparative Example 4

An aqueous dispersion of PHA (manufactured by CJ CheilJedang, Mw 600,000, PDI 1.9, <2 µm particle size, 4HB 10% by weight) having a solid content of 5% was vacuum distilled to have a solid content of 41%.

While stirring 98 parts of the prepared 41% PHA aqueous dispersion at room temperature at 1500 rpm in a stirring device equipped with a paddle or turbine impeller, 1 part of 10% dissolved polyvinyl alcohol (PVA, kuraray, Mw 14,200, DH 88 %) was added, followed by stirring for 1 hour.

Then, 1 part of a dispersion of 5% arabic gum (manufactured by ES food) was added and stirred for additional 10 minutes to prepare a 40% PHA aqueous coating solution.

Thus, a composition containing 0.24% by weight of 10% PVA and 0.12% by weight of 5% arabic gum based on the PHA solid content was prepared.

### Experimental Example 1

Dispersion stability of the compositions according to Examples and Comparative Examples was evaluated under severe evaluation conditions (50 °C, 2 weeks). Then, the composition was applied with 15 g/m² on uncoated kraft paper having a basis weight of 180 g/m² and dried at 170 °C for 10 minutes. Thus, a specimen after coating operation is completed was prepared.

For coating, RDS Mayer bar coater was used, and water resistance was measured by the cobb value of the TAPPI T 441 standard, with the test condition of 10x10 cm, 100 mL, and 2 min.

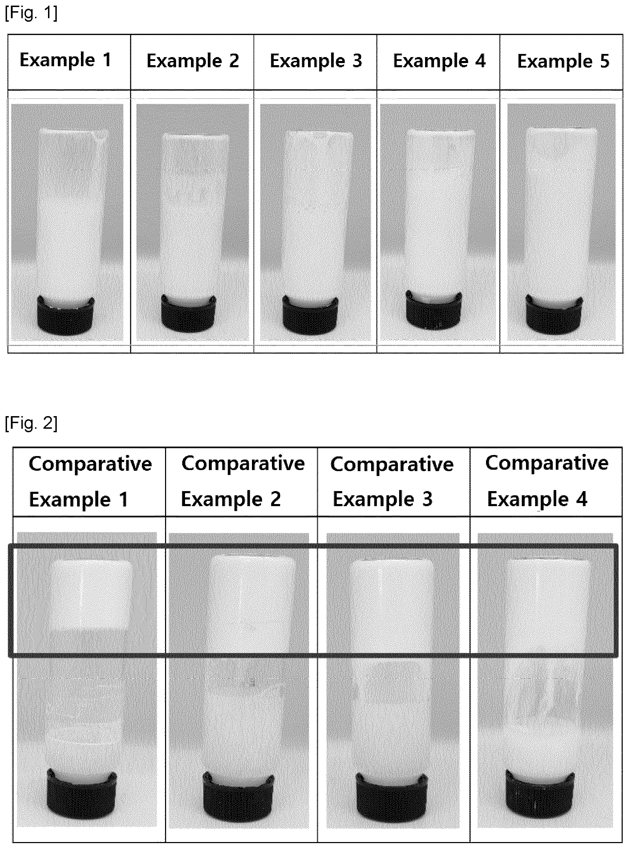

The evaluation results of dispersion stability are shown in Fig. 1 for Examples and Fig. 2 for Comparative Examples. In addition, the evaluation results of water resistance are shown in Table 1.

**[Table 1]**

| Ex. | Coating weight (g/m²) | Cobb value (g/m²) |
|---|---|---|
| Example 1 | 15.1 | 5.73 |
| Example 2 | 16.3 | 6.72 |
| Example 3 | 15.3 | 8.2 |
| Example 4 | 16.1 | 9.3 |
| Example 5 | 15.4 | 9.8 |
| Comparative Example 1 | Specimen not prepared | Not determined |
| Comparative Example 2 | Specimen not prepared | Not determined |
| Comparative Example 3 | Specimen not prepared | Not determined |
| Comparative Example 4 | Specimen not prepared | Not determined |

As shown in Table 1, it can be seen that the compositions according to Examples exhibit excellent physical properties as a paper coating solution.

On the other hand, it was confirmed that the physical properties were not suitable for paper coating for Comparative Example 1 not containing additives, Comparative Example 2 not containing a rheology modifier, Comparative Example 3 using an excessive amount of additives, and Comparative Example 4 using arabic gum rheology modifier having a spherical particle shape.

As described above, according to the composition and the method of the present invention, it is possible to simplify the manufacturing process of the PHA composition and improve the physical properties of the composition to be suitable for the purpose of use while minimizing the content of the additives.

The above description is merely illustrative of the technical idea of the present invention, and various modifications and variations can be made by those skilled in the art without departing from the essential characteristics of the present invention.

In addition, the embodiments disclosed in the present invention are intended not to limit but to explain the technical idea of the present invention, and the scope of the technical idea of the present invention is not limited thereto. The scope to which the present invention is intended to be protected should be construed by the following claims, and all technical ideas within the equivalent thereto should be construed as being included in the scope of the present invention.

## Claims

1. A polyhydroxyalkanoate (PHA) composition comprising, based on the total weight of the composition,
10 to 70% by weight of polyhydroxyalkanoate (PHA); and
1 to 10% by weight of additive,
wherein the PHA comprises poly-3-hydroxybutyrate-co-4-hydroxybutyrate (P3HB-4HB),
the content of 4HB in the PHA copolymer is 0.1 to 20%,
the additive comprises a rheology modifier together with a surfactant or a dispersant, and
the surfactant or the dispersant is present in an amount of less than 0.3% by weight based on the total weight of the composition.

2. The PHA composition according to claim 1, wherein the molecular weight of PHA is Mw 10,000 to 1,000,000.

3. The PHA composition according to claim 1, wherein the particle diameter of PHA is 10 µm or less.

4. The PHA composition according to claim 1, wherein the surfactant includes one or more selected from the group consisting of cationic, anionic, nonionic and amphoteric surfactants.

5. The PHA composition according to claim 1, wherein the additive further comprises one or more selected from the group consisting of a thickener and an antifoaming agent.

6. The PHA composition according to claim 1, wherein the rheology modifier includes one or more selected from the group consisting of gums, acrylics, urethanes, and epoxies.

7. The PHA composition according to claim 6, wherein the gums include one or more selected from the group consisting of gellan gum, xanthan gum, carrageenan, curdlan gum, karaya gum, tragacanth gum, ghatti gum, algin, agar gum and furcellaran.

8. The PHA composition according to claim 1, wherein the dispersant includes one more selected from the group consisting of acrylic-based dispersants, urethane-based dispersants, epoxy-based dispersants, polyvinyl alcohols, and celluloses.

9. The PHA composition according to claim 8, wherein the polyvinyl alcohol has a molecular weight of Mw 10,000 to 200,000 and a degree of hydrolysis of 80 to 99 mol%.

10. The PHA composition according to claim 1, wherein the rheology modifier is present in an amount of 0.5% by weight or less based on the total weight of the composition.

11. The PHA composition according to claim 1, wherein the coating weight of the composition is 10 g/m² or more to 30 g/m².

12. The PHA composition according to claim 1, wherein the cobb value of the composition is 3 g/m² or more to 20 g/m².

13. The PHA composition according to claim 1, wherein the composition is for coating a paper material or a polymeric film.

14. A method for preparing the PHA composition of claim 1, comprising:
preparing an aqueous PHA dispersion; and
adding additive to the dispersion with stirring.
